# FASCICULE DE BREVET EUROPEEN

(11) **EP 0 700 038 B1**
(45) Date de publication et mention de la délivrance du brevet: **27.10.1999**
(21) Numéro de dépôt: 95401804.0
(22) Date de dépôt: 01.08.1995
(51) Int. Cl.: G11B 7/24, G11B 7/135, G11B 7/09

(54) **Système d'écriture/lecture optique d'un support d'enregistrement et application à un disque d'enregistrement**
Optisches Wiedergabe-/Aufzeichnungssystem für ein Aufzeichnungsmedium und Anwendung für eine Aufzeichnungsscheibe
Optical read/write system for recording medium and application to a recording disc

(30) Priorité: 30.08.1994 FR 9410412
(43) Date de publication de la demande: 06.03.1996
(73) Titulaire: THOMSON-CSF, 75008 Paris (FR)
(72) Inventeur: Lehureau, Jean-Claude, Thomson-CSF, F-92402 Courbevoie Cedex (FR)

(56) Documents cités:
- EP-A- 0 073 066
- EP-A- 0 423 364
- US-A- 4 982 395

## Description

L'invention concerne un système d'écriture/lecture optique d'un support d'enregistrement et application à un disque d'enregistrement. Elle est applicable par exemple à des enregistrements optiques tels que les disques optiques numériques utilisés en informatique, les compacts disques, etc.

L'accès aléatoire à une séquence vidéo nécessite le stockage sur disque amovible de très larges quantités d'informations. En effet, si le standard de transmission vidéo numérique haute définition MPEG1 calqué sur le canal audio-numérique non compressé permet l'interactivité, l'utilisation désire dès aujourd'hui des images mieux définies au standard MPEG2 (X8) voire des images issues d'équipement portable ne permettant qu'une compression DCT (Discret Cosinus Transform) aux alentours de 25 Mbits/s. De plus, afin d'assurer un standard unique d'enregistrement, la durée de programme doit être portée à 3 heures sans solution de continuité.

Le reportage électronique introduit un besoin de vidéo de qualité (50 à 150 Mbits/s) sur une durée de 20 minutes. Dans les dix ans à venir la haute définition introduira un besoin 4 fois supérieur.

Le format maximum tolérable aujourd'hui est le 5" en salon et le 3"5 en portable. Les densités d'enregistrement requise sont donc :
- 15 bits/µ² pour 3 heures d'enregistrement MPEG2 sur un 5''
- 20 bits/µ² pour 1 heure d'enregistrement DCT grand public sur un 3''5
- 12 bits/µ² pour 20' d'enregistrement ENG (75 Mbits/s) sur un 5''.

La description des produits ci-dessus montre un chemin réaliste d'évolution de la technologie d'enregistrement optique :
- multiplication par 25 des performances du compact disque par utilisation d'optiques et d'électroniques plus performantes ;
- dans les 10 ans à venir multiplication supplémentaire par 4 des performances par utilisation d'un laser doublé en fréquence.

Le but de l'invention est de réaliser l'enregistrement-lecture de pistes de 0.3 µ à la densité de 125 Kbpi en utilisant un laser conventionnel.

La réalisation d'un spot capable de résoudre 0,2 µ au sens de Shannon (2.5 cycles/µ à 50 % de modulation) suppose l'utilisation d'une ouverture numérique NA = 2 pour un laser de longueur d'onde 0.8 µ. Toutefois, l'utilisation d'un code plus compact (RLL = Run Length Limited ou PRML = Partial Response Maximum Likelihood), d'une égalisation permettant de repousser le point à -6 dB plus près de la fréquence de coupure et d'un laser rouge (0.65 µ) laisse penser qu'une ouverture de l'ordre de 1.2 est suffisante.

De manière conventionnelle, une telle ouverture peut être obtenue par utilisation d'une optique à immersion. L'indice des liquides peut atteindre 2 dans certains composés iodés (mais toxiques) et est facilement égale à 1.7 dans des composés d'usage agréable. Bien que peu réaliste, l'exploitation d'un tel système n'est pas moins crédible que l'utilisation d'un microscope en champ proche. Il a d'ailleurs été proposé de faire de la microscopie en immersion sèche, c'est-à-dire en approchant suffisamment le support d'information de l'objectif pour que l'onde évanescente issue de l'objectif soit captée par une couche à fort indice recouvrant le support. Il est à remarquer que les disques magnétooptiques sont déjà recouverts d'une telle couche pour la protection chimique et l'amélioration du contraste. Les couches utilisées actuellement offrent un indice voisin de 2 ; il ne serait pas irréaliste d'utiliser des couches transparentes dans le rouge d'indice voisin de 4; le potentiel limite de résolution d'un faisceau rouge dans un tel milieu est donc de l'ordre de 0.05 µm.

L'invention concerne un système permettant de conserver une garde importante entre l'objectif et le support, ce qui permet au système de fonctionner même en présence de poussière.

L'invention concerne donc un système d'écriture/lecture optique d'un support d'enregistrement, comportant :
- au moins une source lumineuse émettant trois faisceaux focalisant en trois points distincts sur le support d'enregistrement;
le système étant caractérisé en ce que :
- un dispositif de diffraction crée pour chaque faisceau trois ordres -1, 0 et + 1 de diffraction ;
les points de focalisation des trois faisceaux étant alignés selon la direction de diffraction du dispositif de diffraction et étant distants les uns des autres de manière qu'au point de focalisation de l'ordre 0 du faisceau central focalisent l'ordre -1 d'un faisceau latéral et l'ordre +1 de l'autre faisceau latéral.

Il convient de remarquer qu'il est connu d'utiliser une source lumineuse émettant trois faisceaux focalisant en trois points distincts sur un support d'enregistrement (voir US-A-4 982 395) et de diffracter chacun de ces faisceaux grâce à un réseau de diffraction. Cependant les points de focalisation des faisceaux diffractés ne se superposent pas.

La possibilité de réaliser des faisceaux à forte ouverture numérique dans une couche à fort indice se comprend facilement par l'utilisation de microlentilles. Afin de réaliser l'ensemble dans une couche mince, ces microlentilles peuvent prendre la forme de zones de Fresnel.

On constate toutefois que lors du déplacement du support, on ne génère qu'un spot fixe sur la couche photosensible; il correspond une tache à chaque lentille. Il est certes possible de réaliser des enregistrements multiples en variant l'incidence du faisceau mais on se trouve limité soit par la difficulté d'incliner un faisceau de grande ouverture, soit l'impossibilité d'incliner fortement le faisceau à l'intérieur du matériau si des microlentilles de plus grands diamètres sont utilisés.

Une manière plus mathématique d'exprimer cette limitation est de dire que s'il y a bijection entre les faisceaux monomodes définis dans l'air et ceux définis dans le milieu, la limitation existante dans l'air s'applique dans le milieu d'indice. La seule manière d'augmenter véritablement la capacité du disque est donc de superposer les lentilles de manière à réduire le champ nécessaire à couvrir toute la surface ; ceci se fait au dépens d'une perte d'efficacité puisque toute la lumière n'est pas focalisée sur le même point, mais cette perte est facilement compensée par l'augmentation de sensibilité liée à la réduction de surface du bit.

Selon un mode de réalisation de l'invention pour superposer ces focalisations de faisceau, on prévoit un réseau de diffraction dont la direction de diffraction est parallèle à la direction de défilement des informations du support d'enregistrement (disque). Les stries du réseau sont donc perpendiculaires à cette direction de défilement.

De plus, selon l'invention on éclaire ce réseau par trois faisceaux focalisés vers le support d'enregistrement.

Les différents objets et caractéristiques de l'invention apparaîtront plus clairement dans la description qui va suivre et dans les figures annexées qui représentent :
- les figures 1 et 2, un exemple de réalisation du système de l'invention ;
- la figure 3, un exemple d'application de l'invention à un support d'enregistrement linéaire;
- la figure 4, un exemple d'application de l'invention à un support d'enregistrement circulaire;
- les figures 5a, 5b, un arrangement détaillé du système de l'invention;
- les figures 6a, 6b, des exemples de supports d'enregistrement selon l'invention.

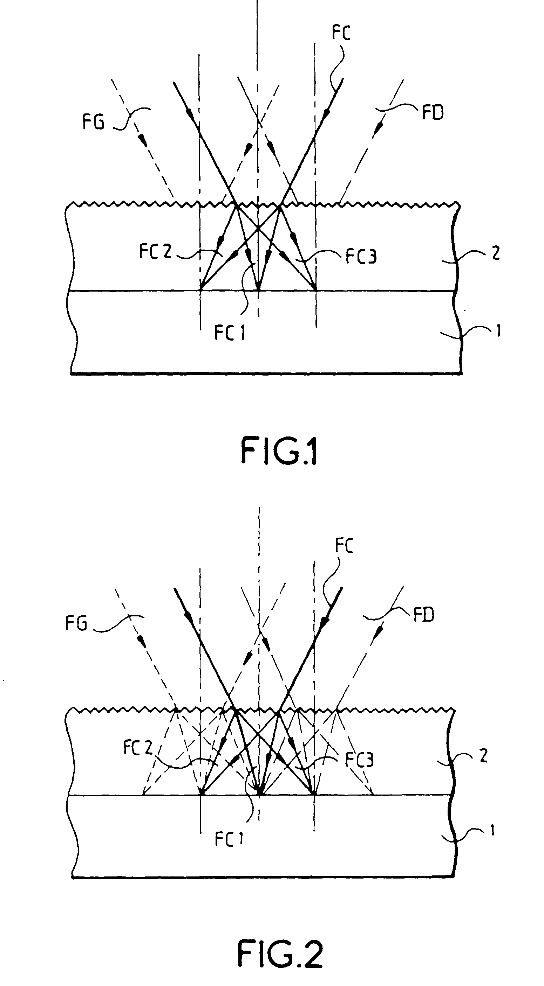

Les figures 1 et 2 représentent un exemple de réalisation d'un tel système.

A un support d'enregistrement 1 est associé un réseau de diffraction 2. Le réseau de diffraction est éclairé par trois faisceaux FG, FC et FD.

Les trois faisceaux FG, FC et FD ont des axes optiques parallèles et seraient destinés à focaliser tous trois dans un plan parallèle à celui du support d'enregistrement 1 en l'absence de réseau de diffraction.

La présence du réseau de diffraction a pour effet de faire focaliser ces faisceaux à la surface du support d'enregistrement 1.

Chaque faisceau est diffracté par le réseau de diffraction pour donner lieu chacun à trois faisceaux. Sur la figure 1, on a représenté que la diffraction du faisceau FC. Celui-ci donne lieu aux trois faisceaux FC1, FC2, FC3. Le faisceau FC donne lieu à un faisceau central FC1 qui est transmis par l'ordre 0 du réseau et qui focalise sur l'axe optique. On a également deux faisceaux latéraux FC2 et FC3 diffractés dans les ordres +1 et -1 du réseau.

Les faisceaux FG et FD sont également diffractés de la même manière. Pour une question de clarté, on n'a pas représenté la diffraction des faisceaux FG et FD sur la figure 1, par contre elle est représentée sur la figure 2.

Selon l'invention, on prévoit également que les positions relatives des faisceaux sont telles que le faisceau latéral FG3 vient focaliser au même endroit que le faisceau FC1, de même pour le faisceau latéral FD2.

En ajustant les phases relatives des lobes secondaire et principal correspondant aux faisceaux latéraux et centraux de chaque faisceau diffracté, on rend les interférences de ces faisceaux constructifs sur le point de focalisation central PFC et destructives sur les points de focalisation latéraux.

Lorsque le support d'enregistrement est en translation devant les trois faisceaux FC, FG, FD la phase du faisceau central (ordre zéro) n'est pas affectée ; par contre la contribution des lobes secondaires (ordre +1 et -1) est soumis à un effet Doppler. En présence de déphasage, les interférences ne sont plus constructives au centre du faisceau ; le maximum d'intensité semble se déplacer avec le substrat et décroît en s'éloignant tandis qu'un nouveau spot apparaît à une distance égale à un pas du réseau. En fait le spot paraît jouer à "saute mouton" sur le disque avec la période du réseau.

Ce phénomène permet certes de superposer plusieurs enregistrements en modifiant la phase des lobes latéraux. Pour cela, les trois faisceaux FG, FC, FD sont obtenus par interposition d'un autre réseau de phase sur le chemin d'un faisceau laser source. De multiples enregistrements peuvent être superposés en modifiant légèrement, pour chaque enregistrement, la position du réseau par rapport à l'axe du faisceau laser source, ce qui modifie la phase relative des ordres diffractés.

Toutefois, la lecture espacée de zones adjacentes du disque ne permet pas de corriger électroniquement la diaphotie entre symboles. On peut donc prévoir un système dans lequel l'ensemble du disque est exploré en un seul passage.

Pour cela, on prévoit de rattraper l'effet Doppler lié au défilement du réseau par un déphasage continu des lobes latéraux.

On constate que le spot peut être affiné d'un facteur 2.5 à mi-hauteur par rapport au lobe principal. La stabilité de ce spot au milieu du lobe est assuré pour toutes les phases du réseau. Ceci nous assure donc une bonne qualité du spot.

On obtient donc au point de focalisation PFC une tâche lumineuse dont l'intensité énergétique est accrue notablement.

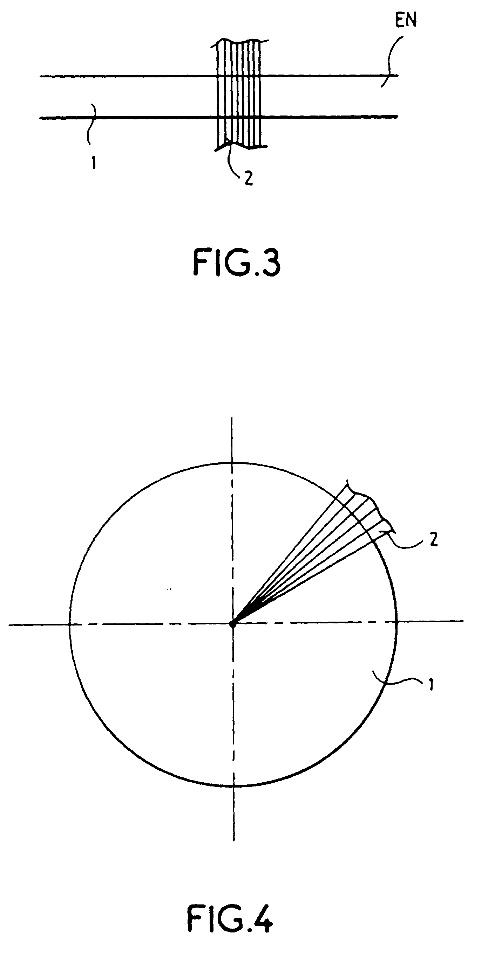

Sur la figure 3, on trouve en vue de dessus une disposition générale du réseau de diffraction 2 par rapport au support d'enregistrement. Par exemple, ce support d'enregistrement est une piste d'enregistrement 1. Les informations sont réparties le long de la direction de cette piste. Le réseau de diffraction 2 doit diffracter les faisceaux représentés en figures 1 et 2 le long de cette direction. Le réseau de diffraction symbolisé par des stries sur la figure 3 a donc ces stries perpendiculaires à la direction d'enregistrement.

La figure 4 représente une application de l'invention a un disque d'enregistrement 1 sur lequel les informations sont enregistrées sur des pistes concentriques. Le réseau de diffraction 2 est alors disposé radialement par rapport à ces pistes.

Selon un premier mode de réalisation, le réseau de diffraction 2 est réalisé à la surface du support d'enregistrement 1 et fait donc partie intégrante du disque.

Selon un autre mode de réalisation, le réseau de diffraction est un dispositif séparé 2 qui se déplace en synchronisme avec le support d'enregistrement. Dans le cas d'un disque d'enregistrement, le réseau de diffraction est réalisé radialement sur un disque qui tourne en même temps que le disque d'enregistrement.

La figure 5a représente un exemple de réalisation d'un dispositif d'écriture et/ou de lecture d'un disque optique.

Pour les applications proposées ci-dessus, la vitesse linéaire du disque varie de 2 à 15 m/s. Une manière simple de réaliser les trois faisceaux FG, FC, FD modulés en phase est d'employer un réseau de phase ou un modulateur acoustooptique MA. La vitesse du son dans ce modulateur à faible performance sera de l'ordre de 1 000 m/s. Il est donc nécessaire d'assurer un grandissement de 60 à 500 entre le spot focalisé (0.6 µ) et la taille du faisceau traversant le modulateur (cuve acoustooptique). Ceci sera assuré par l'interposition d'un collimateur CO de focal adapté entre le laser semiconducteur et le modulateur. Il peut être choisi de réaliser cette partie en optique intégrée et d'utiliser un modulateur à onde de Rayleigh. La fréquence acoustique sera sensiblement égale à la moitié de la fréquence bit soit de 5 à 40 MegaHertz. On voit là que les performances demandées au modulateur sont très limitées. Comme mentionné, on peut prévoir de réaliser le réseau de phase pour réaliser plusieurs enregistrements multiplexés sur une même piste. Entre chaque enregistrement, on déplace le réseau de phase parallèlement à la piste d'enregistrement.

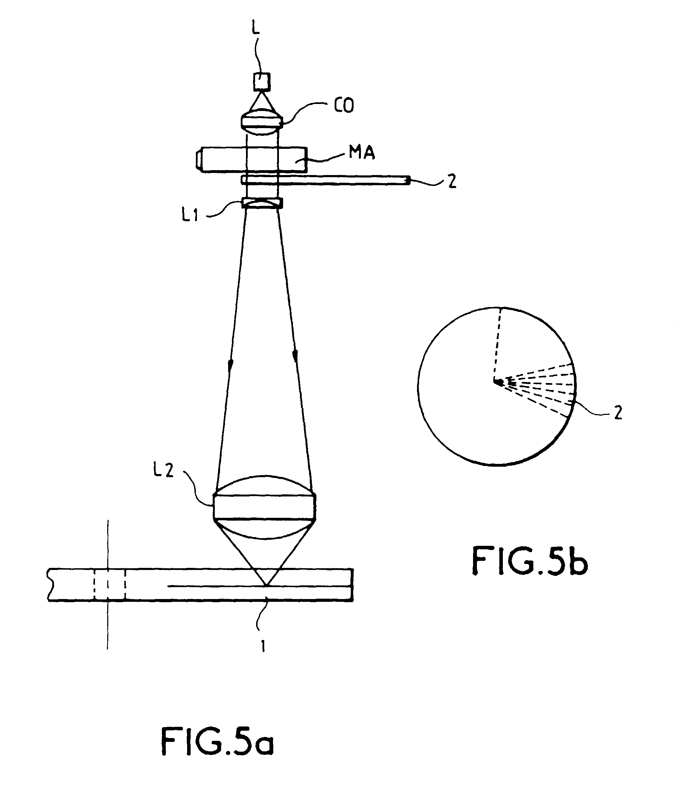

Sur la figure 5a, les faisceaux transmis par le modulateur MA transversent le réseau 2. Celui-ci est représenté en vue de dessus en figure 5b et se présente sous la forme d'un disque. Les faisceaux issus du réseau 2 sont ensuite focalisés sur le disque 1 par des optiques L1 et L2.

Selon une variante non représentée on peut dériver une forme de réalisation de celle de la figure 5a en ne prévoyant pas le réseau séparé 2 mais en le réalisant à la surface du disque 1 comme cela a été indiqué précédemment.

Le système de l'invention peut également être appliqué au suivi de piste du support d'enregistrement. Pour des questions de facilités d'explications on continue la description en supposant que le support d'enregistrement est un disque. Le suivi de piste consistera alors en un suivi radial de façon à maintenir le spot lumineux sur une trajectoire circulaire par rapport au centre du disque.

Selon l'invention, on prévoit donc de part et d'autre du faisceau FC émis par la source (ou par le modulateur MA), deux faisceaux FG' et FD' similaires aux faisceaux FG et FD. Cependant, les faisceaux FG', FC, FD' sont alignés de préférence perpendiculairement à la direction d'enregistrement. Ils sont donc dans un plan contenant un rayon du disque de façon que leurs spots sur le disque soient alignés selon un rayon du disque.

On prévoit de plus un réseau de diffraction diffractant ces faisceaux radialement par rapport au disque. Ce réseau est donc orienté selon la direction de déplacement du support d'informations. Dans le cas d'un disque, le réseau de diffraction est placé tangentiellement aux pistes du disque. Le déplacement radial étant lent et bidirectionnel, il est préférable de réaliser ces lobes par un réseau gravé que l'on déplace mécaniquement. Afin d'assurer un suivi continu de piste, il peut être préférable de faire tourner un petit disque portant un réseau radial dont les lignes d'indices (stries par exemple) sont radiales sur ce disque et tangentielles aux pistes du disque d'enregistrement.

Le fonctionnement de ce pick-up suppose outre les asservissements traditionnels en radial et vertical, la poursuite des phases des réseaux radial et tangentiel. Des signaux d'erreur peuvent sans doute être déduits de la lumière réfléchie sur les lobes latéraux.

Selon un mode de réalisation les deux réseaux décrits précédemment c'est-à-dire celui perpendiculaire à la direction de déplacement du support d'enregistrement et celui parallèle sont donc perpendiculaires entre eux et peuvent être réalisés sur un même support. Par exemple, ils peuvent être réalisés à la surface du disque.

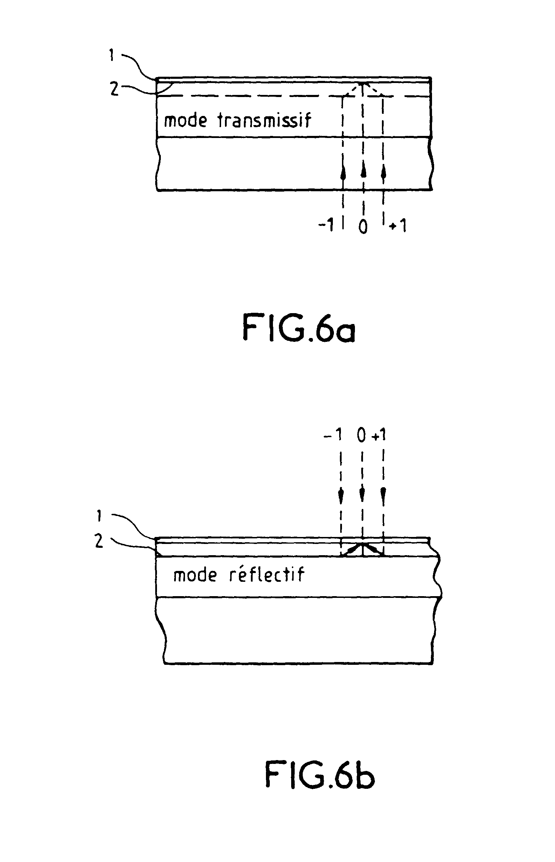

Le ou les réseaux ainsi décrits peuvent être réalisés en mode transmissif ou en mode réflectif. La figure 6a représente un réseau de diffraction 2 réalisé en mode transmissif sur un disque et la figure 6b représente un réseau de diffraction réalisé en mode réflectif.

L'effet d'affinement du spot est optimum pour des déphasages introduits par le réseau de l'ordre du radian (amplitude 0-crête) soit 0.1 µ :
- il est possible de réaliser de tels déphasages par enregistrement d'un réseau dans un milieu photoréfractif. L'écart d'indice n'étant que de 0.1 à 0.2, l'épaisseur de résine insolée doit être de l'ordre du micron ;
- il est possible de réaliser le réseau par copie mécanique dans une résine thermo-moulable ; toutefois, le contrôle de l'épaisseur de cette résine après moulage doit être fait avec soin ; d'autre part l'indice de cette résine ne peut être que de l'ordre de 1.5, la profondeur du relief sera donc de l'ordre de 0.15 µ;
- il est enfin possible de réaliser le réseau mécaniquement lors de l'injection du substrat soit en transmission : le réseau est alors recouvert d'un matériau à fort indice puis de la couche d'enregistrement ; soit en réflexion: le réseau est recouvert d'une couche réflectrice puis d'une couche d'indice et de la couche d'enregistrement.

## Revendications

1. Système d'écriture/lecture optique d'un support (1) d'enregistrement, comportant :
- au moins une source lumineuse émettant trois faisceaux (FG, FC, FD) focalisant en trois points distincts sur le support d'enregistrement ;
le système étant caractérisé en ce que :
- un dispositif de diffraction (2) crée pour chaque faisceau trois ordres de diffraction -1, 0, +1;
les points de focalisation des trois faisceaux étant alignés selon la direction de diffraction du dispositif de diffraction et étant distants les uns des autres de manière qu'au point de focalisation de l'ordre 0 du faisceau central focalisent l'ordre -1 d'un faisceau latéral et l'ordre +1 de l'autre faisceau latéral.

2. Système selon la revendication 1, caractérisé en ce que la direction de diffraction du dispositif est parallèle à la direction de déplacement du support d'enregistrement.

3. Système selon l'une des revendications 1 ou 2, caractérisé en ce que la direction de diffraction du dispositif est perpendiculaire à la direction de déplacement du support d'enregistrement.

4. Système selon la revendication 1, caractérisé en ce que le dispositif de diffraction est un réseau de diffraction.

5. Système selon la revendication 2, caractérisé en ce que le réseau de diffraction se déplace à la même vitesse que le support d'enregistrement.

6. Système selon la revendication 3, caractérisé en ce que le réseau de diffraction se déplace à la même vitesse que le ou les faisceaux de lecture par rapport au support d'enregistrement.

7. Système selon l'une des revendications 3 ou 5, caractérisé en ce que le réseau de diffraction est intégré au support d'enregistrement.

8. Système selon la revendication 2, caractérisé en ce que le réseau de diffraction est linéaire et que ses stries d'indices sont perpendiculaires à la direction de déplacement du support d'enregistrement.

9. Système selon la revendication 8, caractérisé en ce que le support d'enregistrement est circulaire, les pistes d'enregistrement sont également circulaires et les stries sont radiales.

10. Système selon la revendication 3, caractérisé en ce que le support d'enregistrement est circulaire, les pistes d'enregistrement sont également circulaires, et les stries sont de direction tangentielle aux pistes.

11. Système selon la revendication 1, caractérisé en ce que la source lumineuse comporte un réseau de diffraction créant trois faisceaux à partir d'un seul faisceau.

12. Système selon la revendication 11, caractérisé en ce que le réseau de diffraction peut être déplacé parallèlement à la direction de la piste pour réaliser plusieurs enregistrements sur une même piste.

13. Système selon la revendication 6, caractérisé en ce que le support d'enregistrement est un disque et qu'il comporte un disque de diffraction comportant un réseau de diffraction dont les lignes d'indices sont radiales sur ce disque de diffraction et tangentielles par rapport aux pistes du disque d'enregistrement.

14. Disque d'enregistrement pour utilisation dans un système selon l'une quelconque des revendications précédentes, caractérisé en ce qu'il comporte au moins un réseau de diffraction (2) recouvrant la surface utile (1) d'enregistrement du disque.

15. Disque d'enregistrement pour utilisation dans un système selon la revendication 11, caractérisé en ce qu'il comporte un réseau de diffraction dont les stries d'indice sont réalisées radialement sur le disque.

16. Disque d'enregistrement selon la revendication 14, caractérisé en ce qu'il comporte un réseau de diffraction dont les stries d'indices sont réalisées concentriquement au centre du disque.

17. Disque d'enregistrement selon la revendication 14, caractérisé en ce qu'il est à lecture et/ou inscription optique ou magnétooptique.

18. Disque d'enregistrement selon la revendication 14, caractérisé en ce qu'il fonctionne en réflexion ou en transmission.

## Patentansprüche

1. Optisches Schreib-Lesesystem für einen Aufzeichnungsträger (1), der mindestens eine drei Strahlen (FG, FC, FD) aussendende Lichtquelle besitzt, wobei diese Strahlen in drei getrennten Punkten auf den Aufzeichnungsträger fokussiert werden,
dadurch gekennzeichnet, daß eine Beugungsvorrichtung (2) für jeden Strahl drei Beugungsränge -1, 0, +1 erzeugt, wobei die Brennpunkte der drei Strahlen gemäß einer Beugungsrichtung der Beugungsvorrichtung fluchten und in einem gegenseitigen Abstand angeordnet sind, sodaß im Brennpunkt des Rangs null des zentralen Strahls auch der Rang -1 eines der seitlichen Strahlen und der Rang +1 des anderen seitlichen Strahls fokussiert werden.

2. System nach Anspruch 1, dadurch gekennzeichnet, daß die Beugungsrichtung der Vorrichtung parallel zur Richtung des Durchlaufs des Aufzeichnungsträgers verläuft.

3. System nach einem der Ansprüche 1 oder 2, dadurch gekennzeichnet, daß die Beugungsrichtung der Vorrichtung senkrecht zur Richtung des Durchlaufs des Aufzeichnungsträgers verläuft.

4. System nach Anspruch 1, dadurch gekennzeichnet, daß die Beugungsvorrichtung ein Beugungsgitter ist.

5. System nach Anspruch 2, dadurch gekennzeichnet, daß das Beugungsgitter sich mit der gleichen Geschwindigkeit wie der Aufzeichnungsträger bewegt.

6. System nach Anspruch 3, dadurch gekennzeichnet, daß das Beugungsgitter sich mit der gleichen Geschwindigkeit wie der Lesestrahl oder die Lesestrahlen bezüglich des Aufzeichnungsträgers bewegt.

7. System nach einem der Ansprüche 3 bis 5, dadurch gekennzeichnet, daß das Beugungsgitter in den Aufzeichnungsträger integriert ist.

8. System nach Anspruch 2, dadurch gekennzeichnet, daß das Beugungsgitter linear ist und daß seine Indexstreifen senkrecht zur Richtung des Durchlauf des Aufzeichnungsträger verlaufen.

9. System nach Anspruch 8, dadurch gekennzeichnet, daß der Aufzeichnungsträger kreisförmig ist, daß die Aufzeichnungsspuren ebenfalls kreisförmig sind und aß die Streifen radial verlaufen.

10. System nach Anspruch 3, dadurch gekennzeichnet, daß der Aufzeichnungsträger kreisförmig ist, daß die Aufzeichnungsspuren ebenfalls kreisförmig verlaufen und daß die Streifen tangential zu den Spuren verlaufen.

11. System nach Anspruch 1, dadurch gekennzeichnet, daß die Lichtquelle ein Beugungsgitter enthält, das aus einem einzigen Strahl drei Strahlen erzeugt.

12. System nach Anspruch 11, dadurch gekennzeichnet, daß das Beugungsgitter parallel zur Richtung der Spuren verschoben werden kann, um mehrere Aufzeichnungen auf einer gemeinsamen Spur zu realisieren.

13. System nach Anspruch 6, dadurch gekennzeichnet, daß der Aufzeichnungsträger eine Scheibe ist und daß er eine Beugungsscheibe enthält, die ein Beugungsgitter aufweist, dessen Indexlinien radial auf dieser Beugungsscheibe und tangential bezüglich der Spuren der Aufzeichnungsscheibe verlaufen.

14. Aufzeichnungsscheibe zur Verwendung in einem System nach einem beliebigen der vorstehenden Ansprüche, dadurch gekennzeichnet, daß sie mindestens ein Beugungsgitter (2) besitzt, das die Aufzeichnungs-Nutzoberfläche (1) der Scheibe bedeckt.

15. Aufzeichnungsscheibe zur Verwendung in einem System nach Anspruch 11, dadurch gekennzeichnet, daß sie ein Beugungsgitter enthält, dessen Indexstreifen radial auf der Scheibe realisiert sind.

16. Aufzeichnungsscheibe nach Anspruch 14, dadurch gekennzeichnet, daß sie ein Beugungsgitter enthält, dessen Indexstreifen konzentrisch bezüglich des Zentrums der Scheibe realisiert sind.

17. Aufzeichnungsscheibe nach Anspruch 14, dadurch gekennzeichnet, daß sie ein optisches oder ein magnetooptisches Lesen und/oder Schreiben erlaubt.

18. Aufzeichnungsscheibe nach Anspruch 14, dadurch gekennzeichnet, daß sie im Reflexions- oder Durchleuchtungsmodus arbeitet.

## Claims

1. System for optically writing to/reading a recording medium (1), comprising:
- at least one light source which emits three beams (FG, FC, FD) focussing at three distinct points on the recording medium;
the system being characterised in that:
- a diffraction device (2) creates three orders of diffraction -1, 0, +1 for each beam;
the focussing points of the three beams being aligned in the direction of diffraction of the diffraction device and being remote from one another such that at the order 0 focussing point of the central beam, the order -1 of one lateral beam and the order +1 of the other lateral beam are focussed.

2. System according to claim 1, characterised in that the direction of diffraction of the device is parallel to the direction in which the recording medium is displaced.

3. System according to either of claims 1 and 2, characterised in that the direction of diffraction of the device is perpendicular to the direction in which the recording medium is displaced.

4. System according to claim 1, characterised in that the diffraction device is a diffraction grating.

5. System according to claim 2, characterised in that the diffraction grating is displaced at the same speed as the recording medium.

6. System according to claim 3, characterised in that the diffraction grating is displaced at the same speed as the reading beam or beams with respect to the recording medium.

7. System according to either of claims 3 and 5, characterised in that the diffraction grating is integrated in the recording medium.

8. System according to claim 2, characterised in that the diffraction grating is linear and that its index striations are perpendicular to the direction in which the recording medium is displaced.

9. System according to claim 8, characterised in that the recording medium is circular, the recording tracks are likewise circular and the striations are radial.

10. System according to claim 3, characterised in that the recording medium is circular, the recording tracks are likewise circular, and the striations run in a direction tangential to the tracks.

11. System according to claim 1, characterised in that the light source comprises a diffraction grating which creates three beams from a single beam.

12. System according to claim 11, characterised in that the diffraction grating can be displaced parallel to the direction of the track in order to make a plurality of recordings on the same track.

13. System according to claim 6, characterised in that the recording medium is a disk and that it comprises a diffraction disk having a diffraction grating whose index lines are radial on said diffraction disk and tangential with respect to the tracks of the recording disk.

14. Recording disk for use in a system according to any of the preceding claims, characterised in that it comprises at least one diffraction grating (2) covering the useful recording surface (1) of the disk.

15. Recording disk for use in a system according to claim 11, characterised in that it comprises a diffraction grating whose index striations are realised radially on the disk.

16. Recording disk according to claim 14, characterised in that it comprises a diffraction grating whose index striations are realised concentrically to the centre of the disk.

17. Recording disk according to claim 14, characterised in that it can be read and/or written to optically or magneto-optically.

18. Recording disk according to claim 14, characterised in that it operates reflectively or transmissively.
